# EUROPÄISCHE PATENTSCHRIFT

(11) **EP 3 638 496 B1**
(45) Veröffentlichungstag und Bekanntmachung des Hinweises auf die Patenterteilung: **09.03.2022**
(21) Anmeldenummer: 18726904.8
(22) Anmeldetag: 20.04.2018
(51) Int. Cl.: B29D 30/32

(54) **VERFAHREN UND VORRICHTUNG ZUR HERSTELLUNG VON REIFEN**
METHOD AND APPARATUS FOR MANUFACTURING TIRES
PROCÉDÉ ET DISPOSITIF DE FABRICATION DE PNEUMATIQUES

(30) Priorität: 16.06.2017 DE 102017005818
(43) Veröffentlichungstag der Anmeldung: 22.04.2020
(73) Patentinhaber: Harburg-Freudenberger Maschinenbau GmbH, 21079 Hamburg (DE)
(72) Erfinder: WACHTER, Markus, 22926 Ahrensburg (DE); BEHRENS, Achim, 21271 Asendorf (DE); LANGE-KRAUEL, Thomas, 21037 Hamburg (DE)
(74) Vertreter: Klickow & Wetzel PartGmbB
(86) Internationale Anmeldenummer: PCT/DE2018/000112
(87) Internationale Veröffentlichungsnummer: WO 2018/228621

(56) Entgegenhaltungen:
- WO-A1-01/08874
- DE-A1- 2 555 111
- DE-A1-102011 050 142
- JP-A- 2013 056 445

## Beschreibung

Die Erfindung betrifft eine Vorrichtung zur Herstellung von Reifen, Die Erfindung betrifft darüber hinaus ein Verfahren zur Herstellung von Reifen. Die Vorrichtung umfasst eine Reifenaufbautrommel, aufweisend eine Einrichtung zur Realisierung eines Lagenumschlages, zur Herstellung von unvulkanisierten Reifenrohlingen.

Bei der Herstellung von unvulkanisierten Reifenrohlingen werden typischerweise Luftbälge zur Bereitstellung der erforderlichen Andruckkräfte beim Lagenumschlag verwendet. Derartige Trommeln sind relativ teuer und machen in vorgegebenen zyklischen Abständen eine Auswechslung der Luftbälge erforderlich. Bekannt ist aus der EP-A 1 001 876 bereits, mechanische Wulstumschlagvorrichtungen zu realisieren, bei denen der erforderliche Andruck unter Verwendung einer Vielzahl von einzelnen Hebeln erreicht wird, die ähnlich zu den Streben eines Regenschirmes angeordnet sind. Diese mechanischen Vorrichtungen weisen gegenüber einer Verwendung von Luftbälgen eine erhöhte Standzeit auf, ermöglichen jedoch keine symmetrischen Fahrbewegungen.

Eine Reifenaufbautrommel sowie ein Verfahren zur Herstellung von Reifen, die symmetrische Fahrbewegungen ermöglichen, sind aus der DE 2006 012 026 A1 bekannt.

In der DE 2006 012 026 A1 wird offenbart, dass die Einrichtung zur Realisierung des Lagenumschlages eine Mehrzahl von Umschlagfingern aufweist, die über Schieberinge mit einem Antrieb gekoppelt sind, der außerhalb der Reifenaufbautrommel angeordnet ist.

Ein Verfahren der Umschlagfinger ist dabei mithilfe der Kernsetzvorrichtung realisiert, die durch radiales Verfahren in eine Kupplung der Reifenaufbautrommel koppelbar sind und durch ein axiales Verfahren nach der Ankopplung den Antrieb mit den Umschlagfingern koppeln.

Durch die in dem genannten Stand der Technik beschriebene Vorrichtung ist jedoch nur eine Kopplung der Umschlagfinger mit dem Antrieb ohne gleichzeitige Rotation der Reifenaufbautrommel möglich. Dies beschränkt den Anwendungsbereich einer derart ausgeführten Reifenaufbautrommel auf die Herstellung von Reifenkonstruktionen, bei denen das Gürtelpaket über die Seitenwände des Reifenrohlings umgeschlagen ist (TOS - tread over sidewall).

Für die Herstellung von Reifenkonstruktionen, bei denen die Seitenwände des Reifenrohlings über das Gürtelpaket umgeschlagen sind (SOT - sidewall over tread) ist es hingegen erforderlich, dass eine Rotation der Reifenaufbautrommel während des Herstellungsverfahrens ermöglicht wird. Damit die Karkasse dabei punktgenau auf der Trommel fixiert bleibt, ist eine zumindest bei der Rotation realisierte Außenschulter zur Verhinderung des Lösens der Karkasse aus ihrer Klemmung durch auftretende Drucckräfte notwendig.

Mögliche Druckkräfte, die ein Verrutschen der Karkasse auf der Trommel verursachen könnten, treten beispielsweise in Form des Karkassinnendruckes in Verbindung mit den Druckkräften vom Anrollen der Karkasse bei der Herstellung der Reifenrohlinge auf.

Aus der DE 10 2011 050 142 A1 ist bereits eine Vorrichtung zur Herstellung von Reifen bekannt, die mit einer Reifenaufbautrommel versehen ist. Zur Realisierung eines Lagenumschlages von Materiallagen bei der Herstellung von unvulkanisierten Reifen werden Umschlagfinger verwendet. Die Umschlagfinger sind mit einer Antriebseinheit gekoppelt.

Eine ähnliche Vorrichtung zur Herstellung von Reifen wird auch in der DE 25 55 111 A1 beschrieben.

In der WO 01/08874 A1 werden eine weitere Vorrichtung sowie ein Verfahren zur Herstellung von Reifen unter Verwendung einer Reifenaufbautrommel beschrieben. Zur Realisierung eines Lagenumschlages werden Umschlagfinger verwendet.

Eine weitere Vorrichtung sowie ein weiteres Verfahren zur Herstellung von Reifen unter Verwendung von Reifenaufbautrommeln werden in der JP 2013 056445 A erläutert.

Eine Aufgabe der Erfindung ist es daher, eine Vorrichtung zur Herstellung von Reifen mit außerhalb der Reifenaufbautrommel gelagertem Antrieb der Umschlagfinger derart zu konstruieren, dass sowohl die Herstellung von Reifenkonstruktionen in einem SOTals auch in einem TOS-Aufbau ermöglicht wird.

Diese Aufgabe wird erfindungsgemäß durch eine Realisierung einer Vorrichtung zur Herstellung von Reifen entsprechend der in dem unabhängigen Patentanspruch 1 offenbarten Merkmale gelöst.

Dem Patentanspruch 1 entsprechend, weist eine erfindungsgemäße Vorrichtung zur Herstellung von Reifen eine Reifenaufbautrommel zur Herstellung von unvulkanisierten Reifenrohlingen auf, wobei die Reifenaufbautrommel eine Einrichtung zur Realisierung eines Lagenumschlages aufweist. Die Einrichtung zur Realisierung des Lagenumschlages umfasst eine Mehrzahl von Umschlagfingern, die über mindestens zwei Schieberinge mit einem außerhalb der Reifenaufbautrommel angeordneten Antrieb koppelbar sind. Erfindungsgemäß sind die Umschlagfinger sowohl bei einem Stillstand als auch bei einer Rotation der Reifenaufbautrommel mit dem Antrieb koppelbar und mit diesem steuerbar.

Eine weitere Aufgabe der Erfindung ist es, ein Verfahren zur Herstellung von Reifen unter Verwendung einer Reifenaufbautrommel mit außerhalb der Reifenaufbautrommel gelagertem Antrieb der Umschlagfinger zu definieren, mit dem sowohl die Herstellung von Reifenkonstruktionen in einem SOT-, als auch in einem TOS-Aufbau ermöglicht wird.

Diese Aufgabe wird erfindungsgemäß durch ein Verfahren zur Herstellung von Reifen entsprechend der in dem unabhängigen Patenanspruch 13 offenbarten Merkmale gelöst.

Der Antrieb der Umschlagfinger wird in einer vorteilhaften Ausführungsform der erfindungsgemäßen Vorrichtung zur Herstellung von Reifen in einem feststehenden Reifenaufbauring gelagert und weist bevorzugt drei Spindeln auf, die vorteilhaft separat, gegensinnig und synchron antreibbar sind. Als Regelung wird bevorzugt eine Momenten-Regelung genutzt. Für die Verstellung der Spindeln werden bevorzugt Servomotoren verwendet, die besonders bevorzugt als Wechselstrom bzw. Drehstromantriebe ausgebildet sind.

Weiterhin bevorzugt sind die drei Spindeln in einer Umfangsrichtung im Wesentlichen mit gleichen Abständen relativ zueinander angeordnet.

Die Kraftübertragung von den Antriebsspindeln auf die entsprechende, in die Reifenaufbautrommel integrierte Mechanik erfolgt in einer vorteilhaften Ausführungsform über radial verfahrbare Mitnehmer. Die Mitnehmer können in einer besonders vorteilhaften Ausführungsform der Erfindung ein Teil der Kernsetzvorrichtung sein.

Durch die Anordnung des Antriebes außerhalb der Reifenaufbautrommel ist es möglich, die Umschlagfinger über sogenannte Schieberinge zu betätigen, die absolut symmetrische Verfahrbewegungen der einzelnen Umschlagfinger vorgeben. Es können hierdurch Reifenrohlinge mit einer sehr hohen und gleichmäßigen Qualität produziert werden.

Für eine gleichmäßige Kraftausübung auf einen Reifenrohling sind die Umschlagfinger in einer vorteilhaften Ausführungsform der Erfindung gleichmäßig, besonders vorteilhaft äquidistant, im Verlauf des Umfanges der Reifenaufbautrommel angeordnet. Je nach Durchmesser der Reifenaufbautrommel weist die erfindungsgemäße Vorrichtung zur Herstellung von Reifen vorteilhaft etwa 40 bis etwa 80 Umschlagfinger je Trommelhälfte auf.

In einer bevorzugten Ausführungsform einer erfindungsgemäßen Vorrichtung zur Herstellung von Reifen weist die Reifenaufbautrommel eine Trommelwelle, eine inboardund eine Outboard-Trommelhälfte und ein Mittenteil auf.

Die innere und äußere Trommelhälfte sind in einer besonders bevorzugten Ausführungsform der Erfindung in axialer Richtung beweglich auf der Trommelwelle gelagert. Das Mittenteil ist in einer vorteilhaften Ausführungsform der Erfindung fest mit der Trommelwelle verbunden.

Die innere und die äußere Trommelhälfte weisen jeweils eine Kernklemmvorrichtung und eine Schulterabstützung auf, die in radialer Richtung relativ zur Achse der Trommelwelle verfahrbar sind.

Weiterhin weisen die innere und die äußere Trommelhälfte in einer vorteilhaften Ausführungsform jeweils mehrere Umschlagfinger auf, mit denen die Lagen des Materials zur Reifenherstellung umschlagbar sind. In einer besonders vorteilhaften Ausführungsform der Erfindung sind die Umschlagfinger im Bereich der Trommelhälften durch eine Zwangsführung derart geführt, dass eine besonders vorteilhafte Kraftausübung auf einen herzustellenden Reifenrohling realisiert ist.

Die radial verfahrbaren Mitnehmer des außerhalb der Reifenaufbautrommel gelagerten Antriebes sind mit den Umschlagfingern über die im Bereich der Trommelhälften angeordneten Schieberinge koppelbar. Die Schieberinge weisen in einer vorteilhaften Ausführungsform eine Ringnut auf, die als Gegenstruktur der Koppelvorrichtung zur Aufnahme der Mitnehmer dient.

In einer besonders vorteilhaften Ausführungsform einer erfindungsgemäßen Vorrichtung zur Reifenherstellung ist der außerhalb der Reifenaufbautrommel angeordnete Antrieb derart mit den Schieberingen koppelbar, dass eine Kopplung von Antrieb und Umschlagfingern sowohl bei einem Stillstand als auch bei einer Rotation der Reifenaufbautrommel realisierbar ist.

Erfindungsgemäß erfolgt die rotationstolerante Kopplung von Antrieb und Umschlagfingern vorteilhaft durch eine rotierbare Lagerung der Schieberinge, die beispielsweise jeweils als ein Wälzlager ausgebildet ist. Die Wälzlager können in einer vorteilhaften Variante der Erfindung als Kugellager und in einer weiteren vorteilhaften Ausführungsform der Erfindung als Rollenlager ausgebildet sein.

Es ist jedoch auch an andere Ausführungsformen einer rotationstoleranten Kopplung von Antrieb und Umschfagfingern gedacht. So ist an eine Anordnung des die Rotation in einem gekoppelten Zustand ermöglichenden Elementes im Bereich der antriebsseitigen Kopplungselemente gedacht, die beispielhaft zumindest im Bereich der Kopplung um eine radiale Achse relativ zur Trommelwelle der Reifenaufbautrommel rotierbare Elemente aufweisen können.

Weiterhin ist an eine elektro-magnetische Kopplung von Antrieb und Schiebering gedacht, die eine rotationstolerante Kopplung von Antrieb und Schiebering über magnetische Felder realisiert.

Eine erfindungsgemäße rotierbare Lagerung der Schieberinge ermöglicht eine Steuerung der Position der Umschlagfinger mithilfe des außerhalb der Reifenaufbautrommel angeordneten Antriebes sowohl bei stillstehender als auch bei rotierender Reifenaufbautrommel, sodass die Umschlagfinger im Bereich eines herzustellenden Reifenrohlings für eine gezielte Kraftausübung, wie zur zumindest temporären Realisierung mindestens einer Außenschulter, ansteuerbar sind. Dadurch sind die Kerne des Reifenrohlings auch während einer Rotation der Reifenaufbautrommel zusätzlich außenseitig fixierbar.

In einer weiteren vorteilhaften Ausführungsform einer Vorrichtung zur Herstellung von Reifen sind sowohl Reifenrohlinge in einem Flachaufbau als auch in einem Kronenaufbau fertigbar.

Dies ist vorteilhaft dadurch realisiert, dass die Karkassmaschine eine zweite Antriebseinheit aufweist. Zusätzlich weist die erfindungsgemäße Vorrichtung eine auswechselbare Reifenaufbautrommel auf, die jeweils mindestens einen Aufbautypen unterstützt.

In einer vorteilhaften Ausführungsform des erfindungsgemäßen Verfahrens zur Herstellung von Reifen sind sowohl Reifenrohlinge in einem Flachaufbau als auch in einem Kronenaufbau fertigbar. Dies ist erfindungsgemäß durch die Ansteuerung einer zweiten Antriebseinheit in der Karkassmaschine für die Herstellung von Reifen im Kronenaufbau realisiert.

Weiterhin ist ein erfindungsgemäßes Verfahren zur Herstellung von Reifen dadurch gekennzeichnet, dass sich durch die Verwendung einer Vorrichtung zur Reifenherstellung mit außerhalb der Reifenaufbautrommel gelagertem Antrieb der Umschlagfinger mit einer rotationstoleranten Kopplung von Antrieb und Umschlagfingern sowohl Reifenrohlinge in einem SOT- als auch in einem TOS-Aufbau fertigen lassen.

Ein typischer Ablauf eines erfindungsgemäßen Verfahrens zur Herstellung von Reifen wird nachfolgend beschrieben. Auf den zylindrischen Trommelkörper mit eingefahrenen Umschlagfingern, Kernklemmvorrichtung und Schulterabstützung werden die Aufbaumaterialien zur Herstellung einer Karkasse lagenweise aufgebracht. Danach werden mit einer segmentierten, ringförmigen Kernsetzvorrichtung zwei Kerne auf den Trommelkörper gesetzt. Die Kerne werden mithilfe der Kernklemmvorrichtung auf der Reifenaufbautrommel fixiert.

Die Kernsetzvorrichtung ist wiederum auf links/rechts-gängigen Spindeln im Reifenaufbauring gelagert, die über Servomotoren präzise und programmgesteuert, axial verfahren kann.

Nach dem Setzen der Kerne fahren die linke und rechte Kernsetzvorrichtung (Mitnehmer) nach außen, so dass sie über den Kupplungen (Ringnute der Schieberinge) stehen. Die kombinierten Kernsetz- und Axial-Antriebssegmente verfahren nun radial nach innen in die Kupplungen. Dadurch ist die servogesteuerte Verbindung zwischen der Kernsetzvorrichtung und den Umschlagfingern hergestellt.

Der Abstand der Kerne wird durch die Drehung einer Spindel innerhalb der Trommelwelle reduziert. Gleichzeitig wird die Schulterabstützung radial ausgefahren und bildet eine stabile Anlage für den folgenden Lagenumschlag-Prozess. Eine Vielzahl von Umschlagfingern, die sehr eng auf der Inboard- und Outboard-Trommelhälfte angeordnet sind, heben das auf ihnen liegende Karkassenmaterial an.

Je nach herzustellendem Reifenaufbautyp (SOT oder TOS) wird zunächst das Laufstreifen-Gürtelpaket bei rotierender Reifenaufbautrommel oder das Seitenwandmaterial an die sich bildende Karkasse angerollt.

Mit zunehmender Reduzierung der Kernabstände und gleichzeitiger Einspeisung von Druckluft in die sich aufwölbende Karkasse werden die Umschlagfinger, über die Axialbewegung nach außen gelenkt. Die Rollen der Umschlagfinger der Inboard- und der Outboard-Trommelhälfte verrollen absolut symmetrisch das Karkassenmaterial an die sich bildende Karkasse (Reifenrohling). Die nach außen gelenkten Umschlagfinger bilden im Rollenkopfbereich sich vergrößernde Abstände, die wiederum durch eine Doppelrollenmechanik ausgefüllt werden.

Hierdurch wird eine flächige Anrollung beim Lagenumschlag erreicht und somit erfolgt eine Vermeidung von Lufteinschlüssen. Nach Vollendung des Lagenumschlages werden von externer Seite weitere Rohlingskomponenten zugeführt.

Die Reifenaufbautrommel ist mit einer externen, bei Bedarf angekuppelten, servogesteuerten Kernsetzvorrichtung versehen. Hierdurch wird ein absoluter Synchronlauf der Rollensysteme beider Trommelhälften gewährleistet. Gleichzeitig gibt es durch den motorischen Synchronlauf keinerlei "stip-slic-Effekte" oder schwierige/instabile Einregelungen einer pneumatischen Umschlagfingerbetätigung. Folglich ist für den Anwender eine deutlich verbesserte Rundlaufqualität/Gleichmäßigkeit insbesondere hinsichtlich besserer Konizität und Seitenkraftschwankungen zu erwarten.

Die erfindungsgemäße Reifenaufbautrommel hat im modularen Aufbau weitere Vorteile aufzuweisen. Der Bereich Kernklemmung und Schulterabstützung kann baugleich zu einem Zwei-Balg-Trommel-Typ realisiert werden, wodurch eine absolut sichere Kernklemmung in Verbindung mit einer radial ausfahrbaren mechanischen Schulterabstützung gegeben ist.

Die Reifenaufbautrommel hat trotz des Einsatzes von Umschlagfingern mit allen ihren Zwischenräumen, eine absolut durchgehende axiale Auflagefläche zur Bildung einer automatischen Spleißnaht.

In den Zeichnungen sind Ausführungsbeispiele der Erfindung schematisch dargestellt. Es zeigen:
- Fig. 1: eine Teilansicht eines Längsschnittes durch eine erfindungsgemäße Reifenaufbautrommel mit mechanischer Vorrichtung zur Realisierung eines Lagenumschlages ohne aufgelegtes Material,
- Fig, 2: einen Längsschnitt durch die in Fig. 1 gezeigte Reifenaufbautrommel mit aufgelegtem Seitenwand-Material,
- Fig. 3: einen Längsschnitt durch die in Fig. 2 gezeigte Reifenaufbautrommel mit zusätzlich aufgelegtem Innerliner-Material,
- Fig. 4: einen Längsschnitt durch die in Fig. 3 gezeigte Reifenaufbautrommel mit zusätzlich aufgelegtem Body Ply-Material,
- Fig. 5: eine Darstellung des Transfers der Gürteltrommel vom Laufstreifenserver zum Reifenaufbauring in einer erfindungsgemäßen Vorrichtung zur Herstellung von Reifen,
- Fig. 6: einen Längsschnitt durch die in Fig. 4 gezeigte Reifenaufbautrommel positioniert im Reifenaufbauring mit gesetzten Kernen,
- Fig. 7: einen Längsschnitt durch die in Fig. 6 gezeigte Reifenaufbautrommel mit ausgefahrener Innenschulter und belüfteter Karkasse,
- Fig. 8: einen Längsschnitt durch die in Fig. 7 gezeigte Reifenaufbautrommel mit in den Ringnuten der Schieberinge positionierten Mitnehmern,
- Fig. 9: einen Längsschnitt durch die in Fig. 8 gezeigte Reifenaufbautrommel mit zum Lagenumschlag und zur Realisierung einer Außenschulter verfahrenen Umschlagfingern,
- Fig. 10: einen Längsschnitt durch die in Fig. 9 gezeigte Reifenaufbautrommel vor dem Umschlagvorgang und mit Darstellung der Anrollvorrichtung für das Gürtelpaket,
- Fig. 11: einen Längsschnitt durch die in Fig. 10 gezeigte Reifenaufbautrommel mit nach dem Anrollen zusätzlich mit der Karkasse verbundenem Gürtelpaket des Laufstreifens,
- Fig. 12: einen Längsschnitt durch die in Fig. 11 gezeigte Reifenaufbautrommel nach erfolgtem Lagenumschlag für einen SOT-Aufbau des Reifenrohlings,
- Fig. 13: eine schematische Darstellung einer erfindungsgemäßen Vorrichtung zur Herstellung von Reifen und
- Fig. 14: eine schematische Darstellung der Kernsetzabstände und der resultierenden Andruckkräfte.

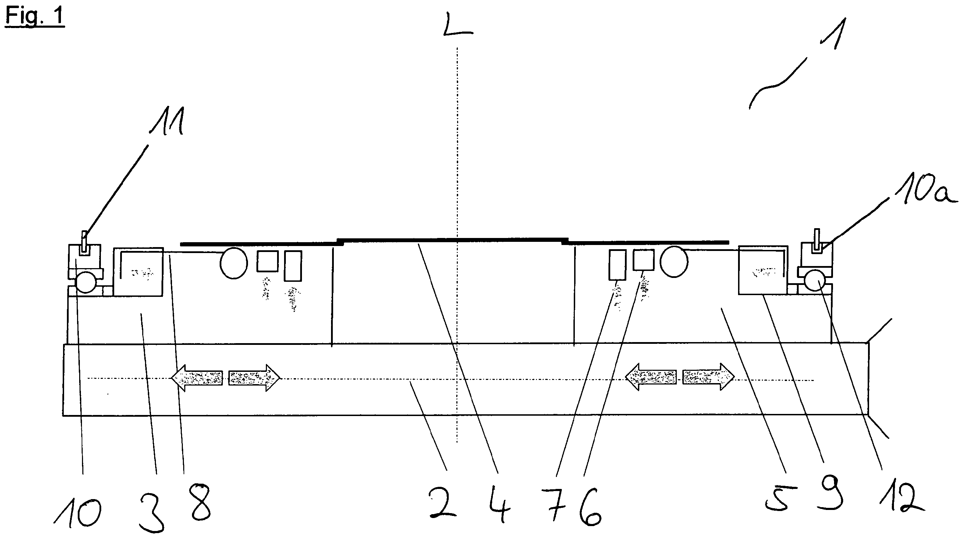

Der in Figur 1 dargestellte Ausschnitt einer Reifenaufbautrommel (1) ist im Bereich der Mitte (L) des Lagenservers (21) angeordnet und weist eine Outboard-Trommelhälfte (3) und eine Inboard-Trommelhälfte (5) auf, die auf einer Trommelwelle (2) gelagert sind. Die beiden Trommelhälften (3, 5) bilden in Verbindung mit einem Mittenteil (4) einen zylindrischen Rundkörper (Trommelkörper). Auf diesem Rundkörper werden die einzelnen Karkassenlagen verarbeitet und zu einem Reifenrohling geformt.

Beide Trommelhälften (3, 5) sind auf der Trommelwelle (2) verriegelbar. Eine Axialverstellung der Trommelhälften (3, 5) ist mit einem Antrieb realisiert, der beispielsweise eine Spindel dreht und somit eine Axialbewegung erzeugt.

Die Trommelhälften (3, 5) weisen jeweils eine Kernklemmvorrichtung (6) und eine Schulterabstützung (7) auf, die in radialer Richtung relativ zur Trommelwelle (2) der Reifenaufbautrommel (1) verfahrbar sind.

Weiterhin weisen die Trommelhälften (3, 5) jeweils mehrere Umschlagfinger (8) zur Realisierung eines Lagenumschlages auf. Die Umschlagfinger (8) sind über eine Zwangsführung (9) für eine verbesserte Kraftausübung auf einen herzustellenden Reifenrohling geführt. Die Umschlagfinger (8) liegen innerhalb der Reifenaufbautrommel (1) in Längsnuten. Zur Ankopplung der Umschlagfinger (8) an einen nicht dargestellten außerhalb der Reifenaufbautrommel (1) angeordneten Antrieb, weisen die Trommelhälften (3, 5) jeweils einen Schiebering (10) auf, mit dem die der jeweiligen Trommelhälfte (3, 5) zugeordneten Umschlagfinger (8) drehbeweglich verbunden sind.

In die Ringnut (10a) der Schieberinge (10) ist jeweils ein an den außerhalb der Reifenaufbautrommel (1) angeordneten Antrieb der Umschlagfinger (8) gekoppelter Mitnehmer (11) verfahren, sodass eine Kopplung der Umschlagfinger (8) mit dem Antrieb realisiert ist.

Die Schieberinge (10) sind jeweils über eine rotierbare Lagerung (12) mit den Trommelhälften (3, 5) verbunden, die in der dargestellten Ausführungsform der Erfindung als jeweils ein Wälzlager realisiert ist.

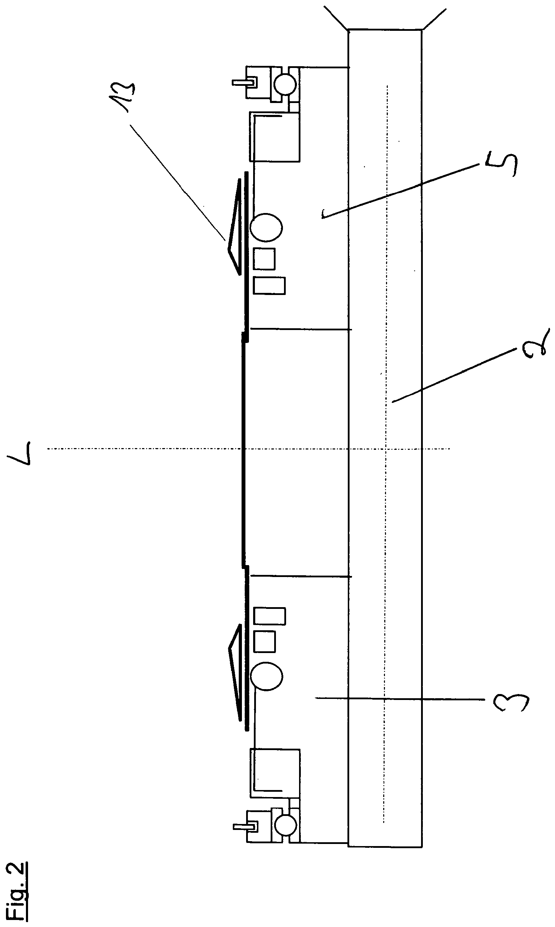

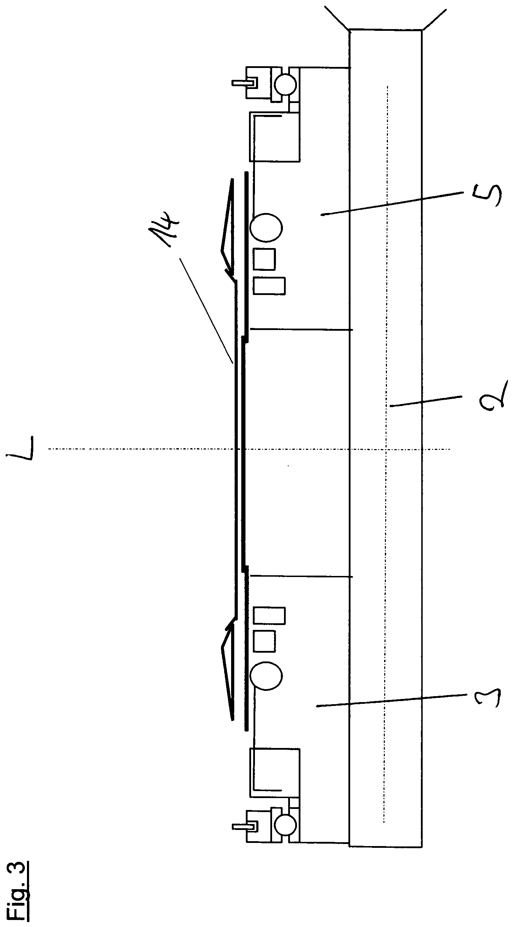

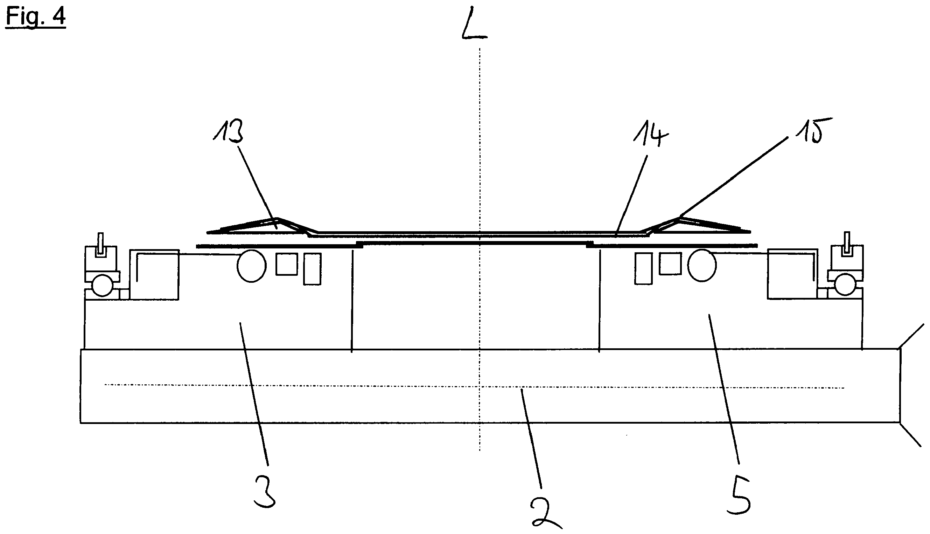

In Figur 2 wird eine erfindungsgemäße Reifenaufbautrommel (1) entsprechend Figur 1 gezeigt. Dargestellt ist weiterhin ein Prozessschritt des erfindungsgemäßen Verfahrens zur Herstellung von Reifen. Während die Reifenaufbautrommel (1) sich im Bereich der Mitte des Lagenservers (21) der erfindungsgemäßen Vorrichtung zur Herstellung von Reifen befindet, werden nacheinander die verschiedenen Materiallagen aufgebracht. Fig. 2 zeigt die Reifenaufbautrommel (1) nach dem Auflegen des Seitenwand-Materials (13). Anschließend wird das Innerliner-Material (14) aufgelegt, was in Figur 3 veranschaulicht wird. In Fig. 4 wird die Reifenaufbautrommel (1) nach dem Auflegen des Body Ply-Materials (15) gezeigt, das auf die zuvor gelegten Lagen (13, 14) aufgelegt wird.

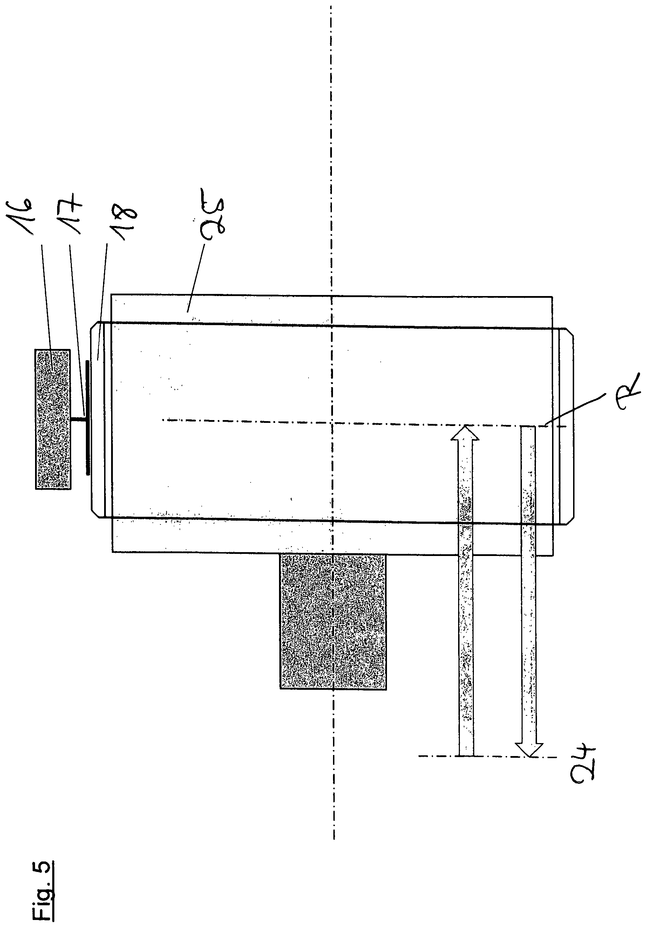

Figur 5 zeigt den nächsten Schritt des erfindungsgemäßen Verfahrens zur Herstellung von Reifen. Die Gürteltrommel (25) wird vom Laufstreifenserver (24) zum Reifenaufbauring (16) transferiert. Der Reifenaufbauring (16) weist einen Greifer (17) auf, der das Gürtelpaket (18) des Reifenrohlings von der Gürteltrommel (25) aufnimmt und hält. Die Gürteltrommel (25) wird dazu im Bereich der Mittellinie (R) des Reifenaufbauringes (16) positioniert. Nachdem das Gürtelpaket (18) von dem Greifer (17) des Reifenaufbauringes (16) aufgenommen wurde, wird die Gürteltrommel (25) wieder zum Laufstreifenserver (24) transferiert.

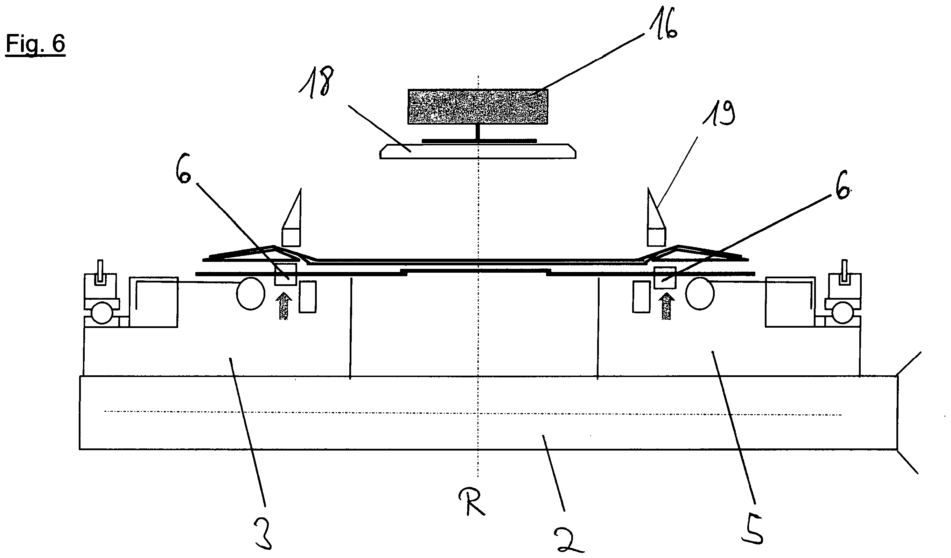

Figur 6 zeigt den Längsschnitt einer erfindungsgemäßen Reifenaufbautrommel (1), die nach dem in Fig. 5 gezeigten Prozessschritt zum Reifenaufbauring (16) transferiert wurde. Die Kerne (19) wurden gesetzt und werden mithilfe der radial nach außen verfahrenen Kernklemmvorrichtung (6) fixiert.

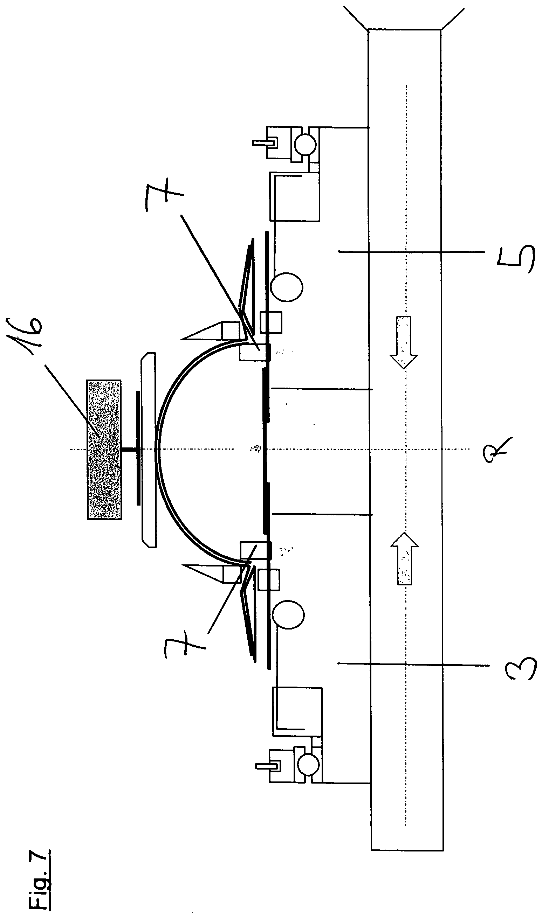

Der folgende in Figur 7 illustrierte Schritt des erfindungsgemäßen Verfahrens zur Herstellung von Reifen ist das Verfahren der Trommelhälften (3, 5), sodass der Kernabstand in Shaping-Position realisiert ist. Weiterhin wird in dem Dargestellten Verfahrensschritt die Schulterabstützung (7) ausgefahren und die Karkasse wird unter einem geringen Druck belüftet. Der benötigte Innendruck wird beispielsweise pneumatisch realisiert.

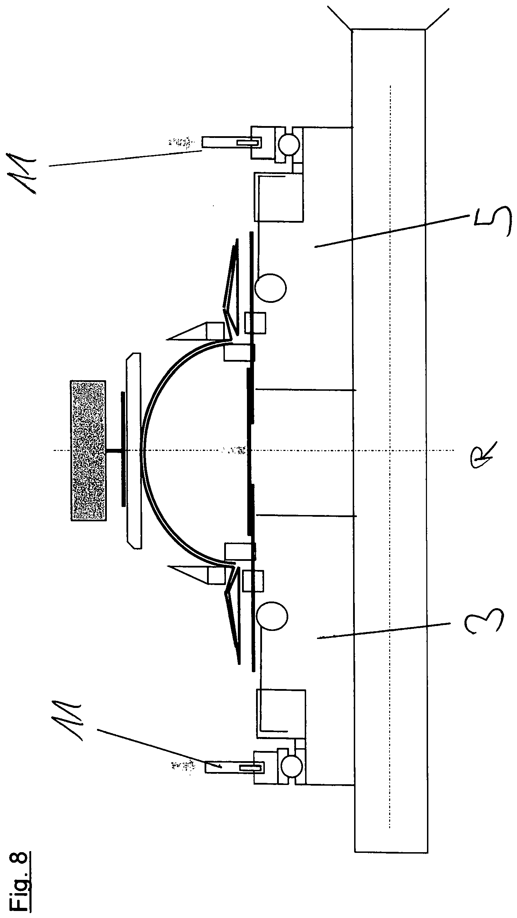

Figur 8 zeigt den nächsten Schritt des erfindungsgemäßen Verfahrens zur Herstellung von Reifen. Die mit dem außerhalb der Reifenaufbautrommel (1) angeordneten Antrieb gekoppelten Mitnehmer (11) werden mithilfe des Antriebes in die Ringnute (10a) der Schieberinge (10) verfahren, wodurch eine Kopplung der Umschlagfinger (8) mit dem Antrieb realisiert wird.

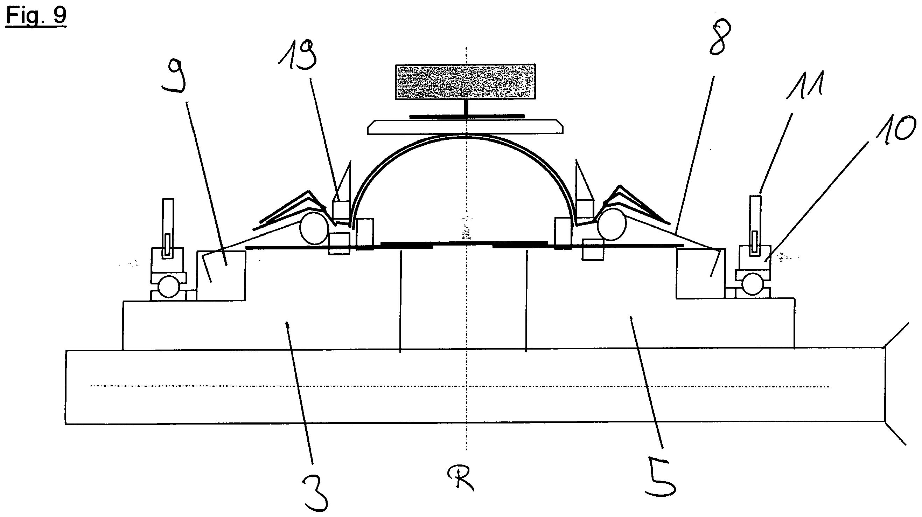

Anschließend werden, wie in Figur 9 gezeigt, die Mitnehmer (11) in axialer Richtung zum Mittenteil (4) der Reifenaufbautrommel (1) hin verfahren, wodurch die Umschlagfinger (8) entsprechend der durch die Zwangsführung (9) vorgegebenen Bewegung aktiviert werden. Die Umschlagfinger (8) steigen bei zusammenfahrenden Mitnehmern (11) an den Kernen (19) auf und bilden Außenschultern für einen herzustellenden Reifenrohling.

Dabei laufen die in Umfangsrichtung vorteilhaft gleichmäßig verteilten Umschlagfinger (8) über Rollen an Ihrer dem Reifenrohling zugewandten Seite zunächst eine nicht dargestellte schräg angeordnete, ringförmige mechanische Fläche hoch.

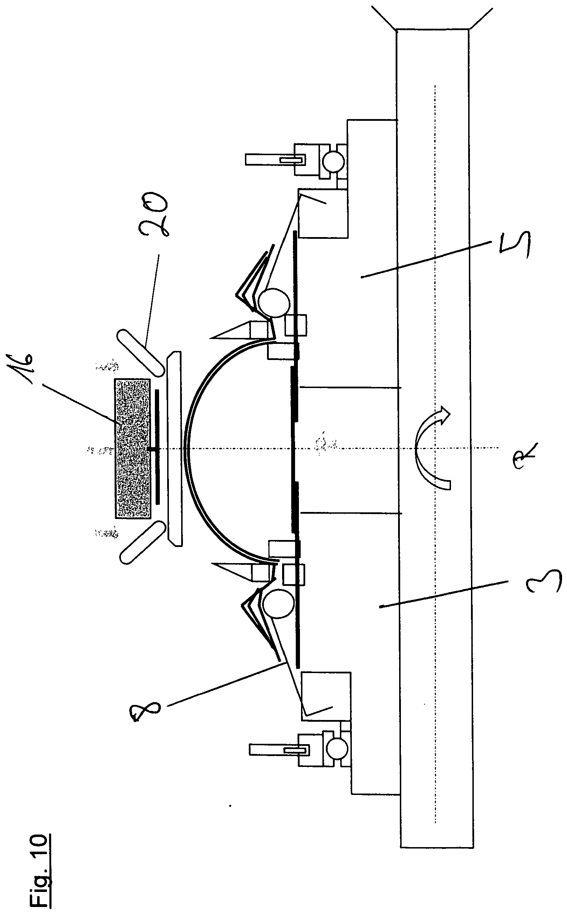

Anschließend wird, wie in Figur 10 dargestellt, der das Gürtelpaket (18) haltende Greifer (17) gelöst. Die Reifenaufbautrommel (1) wird um die Trommelwelle (2) gedreht und der Innendruck der Karkasse wird erhöht. Die durch die Umschlagfinger (8) realisierte Außenschulter fixiert die Karkasse zusammen mit der Schulterabstützung (7) auf der Reifenaufbautrommel (1). Durch die erfindungsgemäße drehbare Lagerung (12) der Schieberinge (10) können der außerhalb der Reifenaufbautrommel (1) angeordnete Antrieb und die Umschlagfinger (8) gekoppelt bleiben, während die Reifenaufbautrommel (1) dreht. Das Gürtelpaket (18) wird mithilfe einer Anrollvorrichtung (20) an die Karkasse angerollt.

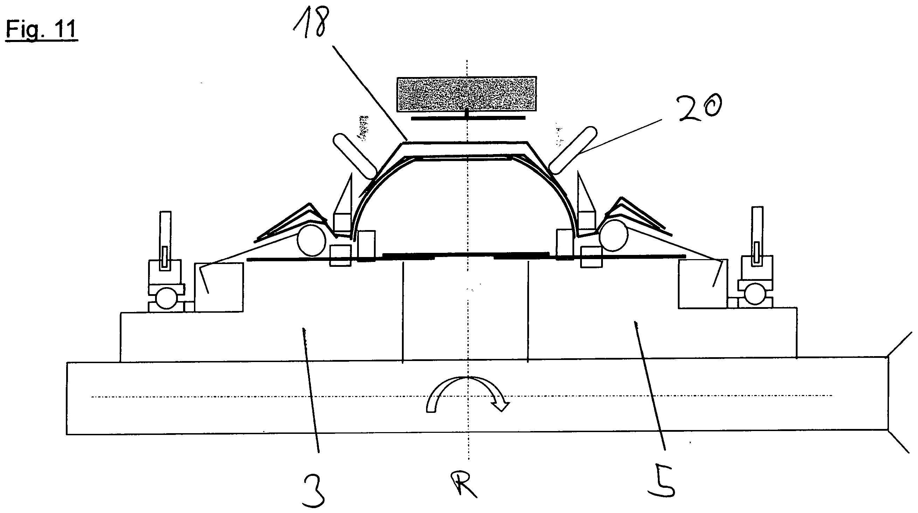

Der Verfahrensschritt des Anrollens des Gürtelpaketes (18) an die Karkasse wird in Figur 11 weiter verdeutlicht. Die Anrollvorrichtung (20) hat die Seiten des Gürtelpaketes (18) auf die Karkasse angerollt. Die Reifenaufbautrommel (1) dreht dabei um ihre Trommelwelle (2), wobei die Karkasse im Bereich der Kerne (19) weiter durch die Umschlagfinger (8) und die Schulterabstützung (7) fixiert ist.

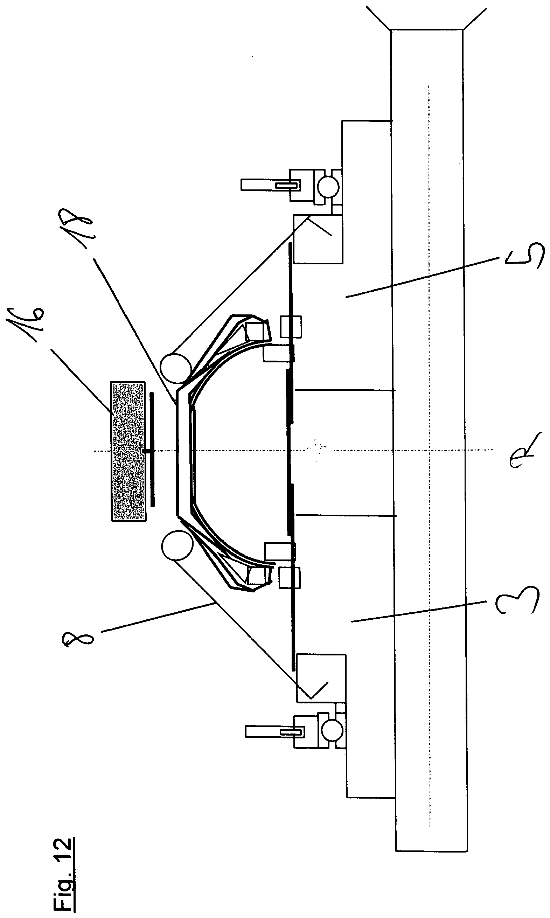

Figur 12 illustriert den Verfahrensschritt des Anrollens der Seitenwände des Gürtelpaketes (18) des Laufstreifens auf die Karkasse. Die Umschlagfinger (8) werden durch ein weiteres Zusammenfahren der Mitnehmer (11) an der Karkasse hochgefahren, worauf dann das elastomere Material der zuvor platzierten Lagen aufgerichtet und um den Kern (19) umgeschlagen wird. In einem weiteren Schritt drücken die Rollen an den Umschlagfingern (8) das Material an die Karkasse an.

Beim anschließenden Zurückziehen der Schieberinge (10) durch ein Auseinanderfahren der Mitnehmer (11) werden die Umschlagfinger (8) wieder in den Längsnuten der Reifenaufbautrommel (1) versenkt. Darauffolgend werden die Mitnehmer (11) zurückgefahren und geben die Ringnuten (10a) der Schieberinge (10) wieder frei.

Durch das Einfahren von Kernklemmvorrichtung (6) und Schulterabstützung (7) wird der Reifenrohling anschließend von der Reifenaufbautrommel (1) gelöst.

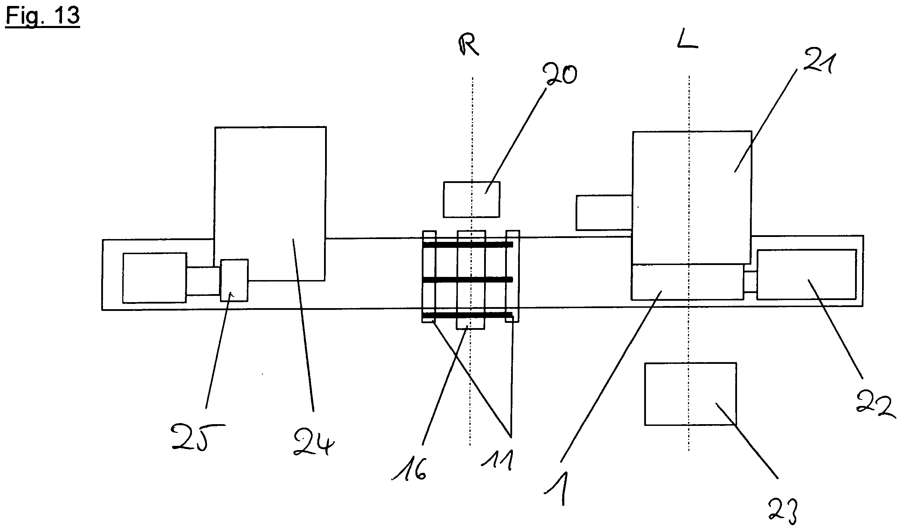

In Figur 13 ist eine vorteilhafte Ausführungsform einer erfindungsgemäßen Vorrichtung zur Herstellung von Reifen schematisch dargestellt. Die Vorrichtung zur Herstellung von Reifen weist eine Reifenaufbautrommel (1) auf, die in dem dargestellten Verfahrensschritt im Bereich der Mitte (L) des Lagenservers (21) angeordnet ist. Weiterhin ist im Bereich des Lagenservers (21) neben der Reifenaufbautrommel (1) eine Karkassmaschine (22) angeordnet.

Weiterhin weist die dargestellte Ausführungsform einer Vorrichtung zur Herstellung von Reifen einen Insert-Server (23) auf, mit dem Verstärkungsstreifen in einen herzustellenden Reifenrohling einbringbar sind.

Darüber hinaus weist die Vorrichtung zur Herstellung von Reifen einen Reifenaufbauring (16) auf, in dessen Bereich die Mitnehmer (11) und der Anroller (20) angeordnet sind.

Zusätzlich weist die Vorrichtung einen Laufstreifenserver (24) auf, mit dem das Gürtelpaket (18) eines herzustellenden Reifenrohlings auf einer Gürteltrommel (25) fertigbar ist.

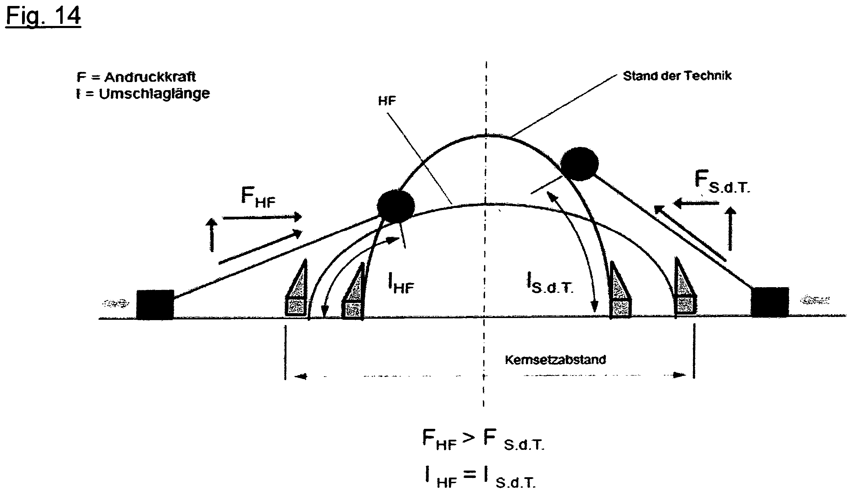

Figur 14 zeigt eine Verdeutlichung der durch die erfindungsgemäße Kernsetzung im Umschlagprozess auftretenden Andruckkraft F. Der Reifenrohling hat durch den größeren oder mindestens gleichen Abstand der gesetzten Kerne voneinander eine flachere oder maximal gleich hohe Kontur im Vergleich zum Stand der Technik. Bei gleicher Umschlaglänge I, ist die relevante horizontale Kraftkomponente F_{HF} des Kraftvektors in der erfindungsgemäßen Ausführungsform einer Vorrichtung zur Herstellung von Reifen größer oder mindestens gleich groß im Vergleich zur horizontalen Kraftkomponente F_{SdT} gemäß dem Stand der Technik.

## Patentansprüche

1. Vorrichtung zur Herstellung von Reifen aufweisend eine Reifenaufbautrommel (1) zur Herstellung von unvulkanisierten Reifenrohlingen, die Reifenaufbautrommel (1) aufweisend eine Einrichtung zur Realisierung eines Lagenumschlages, wobei die Einrichtung zur Realisierung des Lagenumschlages eine Mehrzahl von Umschlagfingern (8) aufweist, die über mindestens zwei Schieberinge (10) mit einem außerhalb der Reifenaufbautrommel (1) angeordneten Antrieb koppelbar sind, wobei die Umschlagfinger (8) sowohl bei einem Stillstand als auch bei einer Rotation der Reifenaufbautrommel (1) mit dem Antrieb koppelbar und mit diesem steuerbar sind, **dadurch gekennzeichnet, dass** der außerhalb der Reifenaufbautrommel (1) gelagerte Antrieb der Umschlagfinger (8) als mehrere separat angetriebene Spindeln realisiert ist, die in einem feststehenden Reifenaufbauring (16) gelagert sind und gegensinnig synchron laufen.

2. Vorrichtung nach Anspruch 1, **dadurch gekennzeichnet, dass** die Kopplung der Umschlagfinger (8) mit dem außerhalb der Reifenaufbautrommel (1) gelagerten Antrieb durch eine rotierbare Lagerung (12) der Schieberinge (10) realisiert ist.

3. Vorrichtung nach Anspruch 2, **dadurch gekennzeichnet, dass** die rotierbare Lagerung (12) der Schieberinge (10) als jeweils ein Wälzlager realisiert ist, durch das radiale und axiale Kräfte aufnehmbar sind.

4. Vorrichtung nach mindestens einem der vorstehenden Ansprüche, **dadurch gekennzeichnet, dass** die Reifenaufbautrommel (1) eine Trommelwelle (2), eine Outboard-Trommelhälfte (3), eine Inboard-Trommelhälfte (5) und ein Mittenteil (4) aufweist, wobei zumindest die Trommelhälften (3, 5) axial auf der Trommelwelle (2) verfahrbar sind,

5. Vorrichtung nach mindestens einem der vorstehenden Ansprüche, **dadurch gekennzeichnet, dass** der außerhalb der Reifenaufbautrommel (1) angeordnete Antrieb der Umschlagfinger (8) als ein Servoantrieb ausgebildet ist.

6. Vorrichtung nach mindestens einem der vorstehenden Ansprüche **dadurch gekennzeichnet, dass** die Schieberinge (10) jeweils eine Ringnut (10a) aufweisen, die zur Ankopplung der Umschlagfinger (8) an den außerhalb der Reifenaufbautrommel (1) angeordneten Antrieb dient.

7. Vorrichtung zur Herstellung von Reifen nach Anspruch 1, **dadurch gekennzeichnet, dass** eine Karkassmaschine (22) derart ausgeführt ist, dass durch die Verwendung verschiedener Reifenaufbautrommeln (1) sowohl Reifenrohlinge im Flachaufbau als auch Reifenrohlinge im Kronenaufbau gefertigt werden können.

8. Vorrichtung zur Herstellung von Reifen nach Anspruch 7 **dadurch gekennzeichnet, dass** die flexible Fertigung von Reifenrohlingen in Flach- oder Kronenaufbau durch eine zweite Antriebseinheit in der Karkassmaschine (22) ermöglicht wird.

9. Vorrichtung zur Herstellung von Reifen nach mindestens einem der vorstehenden Ansprüche, **dadurch gekennzeichnet, dass** die Antriebseinheit im feststehenden Reifenaufbauring (16) durch radial verfahrbare Mitnehmer (11) an Schieberinge (10) der Reifenaufbautrommel (1) ankoppelbar ist.

10. Vorrichtung zur Herstellung von Reifen nach mindestens einem der vorstehenden Ansprüche, **dadurch gekennzeichnet, dass** die Umschlagfinger (8) durch eine Zwangsführung (9) in ihrer Bewegung führbar sind.

11. Vorrichtung zur Herstellung von Reifen nach mindestens einem der vorstehenden Ansprüche, **dadurch gekennzeichnet, dass** die Umschlagfinger (8) derart ansteuerbar sind, dass durch diese zumindest temporär mindestens eine Außenschulter realisiert ist, durch die Kerne (19) zusätzlich zur Kernklemmvorrichtung (6) auch während einer Rotation der Reifenaufbautrommel (1) außenseitig fixierbar sind.

12. Vorrichtung zur Herstellung von Reifen nach mindestens einem der vorstehenden Ansprüche, **dadurch gekennzeichnet, dass** eine effizienter nutzbare Materialandruckkraft erreicht wird, indem der Kernsetzabstand während des Umschlagprozesses derart vorgebbar ist, dass ein Kernsatzabstand größer oder gleich dem kleinsten Kern zu Kern Maß erreicht wird, das im weiteren Reifenaufbauprozess angefahren wird.

13. Verfahren zur Herstellung von Reifen wobei das Verfahren umfasst:
Bereitstellung einer Vorrichtung nach einem der vorhergehenden Ansprüche; **dadurch gekennzeichnet, dass** der Umschlagprozess des Reifenmaterials durch einen außerhalb der Reifenaufbautrommel (1) gelagerten Antrieb der Umschlagfinger (8) angetrieben wird und dass ein Umschlag der Lagen des Materials des Reifenrohlings während der Rotation der Reifenautbautrommel (1) durchgeführt wird.

14. Verfahren nach Anspruch 13 **dadurch gekennzeichnet, dass** durch eine synchrone Ansteuerung der Umschlagmechanik an beiden Trommelhälften (3, 5) der Reifenaufbautrommel (1 ) ein besonders gleichmäßiger Umschlag der Lagen des Reifenrohlings ausgeführt wird.

15. Verfahren nach den Ansprüchen 13 oder 14 **dadurch gekennzeichnet, dass** durch eine Kernsetzung mit einem Kern zu Kern Abstand größer oder gleich dem kleinsten im weiteren Verlauf der Rohreifenfertigung angefahrenen Kernabstands ein vorteilhaftes Kraft-Winkel-Verhältnis entsteht, das eine effektivere Nutzung der Materialandruckkraft ermöglicht.

## Claims

1. Apparatus for manufacturing tyres, having a tyre building drum (1) for manufacturing unvulcanized green tyres, the tyre building drum (1) having a device for realizing a ply turn-up, wherein the device for realizing the ply turn-up has a plurality of turn-up fingers (8), which can be coupled by way of at least two sliding rings (10) to a drive arranged outside the tyre building drum (1), wherein the turn-up fingers (8) can be coupled to the drive and can be controlled by it both when the tyre building drum (1) is at a standstill and when it is rotating, **characterized in that** the drive of the turn-up fingers (8) mounted outside the tyre building drum (1) is realized as a number of separately driven spindles, which are mounted in a fixed tyre building ring (16) and run synchronously in opposite directions.

2. Apparatus according to Claim 1, **characterized in that** the coupling of the turn-up fingers (8) to the drive mounted outside the tyre building drum (1) is realized by a rotatable bearing (12) of the sliding rings (10).

3. Apparatus according to Claim 2, **characterized in that** the rotatable bearing (12) of the sliding rings (10) is realized in each case as a rolling bearing, by which radial and axial forces can be absorbed.

4. Apparatus according to at least one of the preceding claims, **characterized in that** the tyre building drum (1) has a drum shaft (2), an outboard drum half (3), an inboard drum half (5) and a middle part (4), wherein at least the drum halves (3, 5) are movable axially on the drum shaft (2).

5. Apparatus according to at least one of the preceding claims, **characterized in that** the drive of the turn-up fingers (8) arranged outside the tyre building drum (1) is formed as a servo drive.

6. Apparatus according to at least one of the preceding claims, **characterized in that** the sliding rings (10) have in each case an annular groove (10a), which serves for the coupling of the turn-up fingers (8) to the drive arranged outside the tyre building drum (1).

7. Apparatus for manufacturing tyres according to Claim 1, **characterized in that** a carcass machine (22) is configured in such a way that both green tyres of a flat design and green tyres of a crowned design can be produced by using different tyre building drums (1).

8. Apparatus for manufacturing tyres according to Claim 7, **characterized in that** the flexible production of green tyres of a flat or crowned design is made possible by a second drive unit in the carcass machine (22).

9. Apparatus for manufacturing tyres according to at least one of the preceding claims, **characterized in that** the drive unit in the fixed tyre building ring (16) can be coupled to sliding rings (10) of the tyre building drum (1) by radially movable carriers (11).

10. Apparatus for manufacturing tyres according to at least one of the preceding claims, **characterized in that** the turn-up fingers (8) can be guided in their movement by forced guidance (9).

11. Apparatus for manufacturing tyres according to at least one of the preceding claims, **characterized in that** the turn-up fingers (8) can be activated in such a way as to at least temporarily realize at least one outer shoulder by which, in addition to the core clamping device (6), the cores (19) can be fixed on the outside even during rotation of the tyre building drum (1).

12. Apparatus for manufacturing tyres according to at least one of the preceding claims, **characterized in that** a more efficiently usable material pressing force is achieved by the core setting spacing being presettable during the turning-up process in such a way that a core setting spacing greater than or equal to the smallest core-to-core dimension is achieved and adopted in the further tyre building process.

13. Method for manufacturing tyres, wherein the method comprises:
providing an apparatus according to one of the preceding claims; **characterized in that** the turning-up process of the tyre material is driven by a drive of the turn-up fingers (8) mounted outside the tyre building drum (1) and **in that** a turning up of the plies of the material of the green tyre is carried out during the rotation of the tyre building drum (1).

14. Method according to Claim 13, **characterized in that** a particularly uniform turn-up of the plies of the green tyre is created by synchronous activation of the turning-up mechanism on both drum halves (3, 5) of the tyre building drum (1).

15. Method according to Claims 13 or 14, **characterized in that**, by a core setting with a core-to-core spacing greater than or equal to the smallest core spacing adopted in the further course of the production of the green tyre, an advantageous forceangle ratio is obtained, making more effective use of the material pressing force possible.

## Revendications

1. Dispositif de fabrication de pneumatiques, présentant un tambour de confection de pneumatiques (1) pour fabriquer des pneumatiques crus non vulcanisés, le tambour de confection de pneumatiques (1) présentant un équipement permettant de réaliser un retournement de pli, l'équipement permettant de réaliser le retournement de pli présentant une pluralité de doigts de retournement (8) qui peuvent être accouplés par l'intermédiaire d'au moins deux bagues coulissantes (10) à un mécanisme d'entraînement disposé à l'extérieur du tambour de confection de pneumatiques (1), les doigts de retournement (8) pouvant être accouplés au mécanisme d'entraînement et commandés par celui-ci aussi bien à l'arrêt qu'en cas de rotation du tambour de confection de pneumatiques (1),
**caractérisé en ce que** le mécanisme d'entraînement des doigts de retournement (8), monté à l'extérieur du tambour de confection de pneumatiques (1), est réalisé sous la forme de plusieurs broches entraînées séparément qui sont montées dans un anneau de confection de pneumatiques fixe (16) et tournent de manière synchrone en sens inverse.

2. Dispositif selon la revendication 1, **caractérisé en ce que** l'accouplement des doigts de retournement (8) au mécanisme d'entraînement monté à l'extérieur du tambour de confection de pneumatiques (1) est réalisé par un montage rotatif (12) des bagues coulissantes (10) .

3. Dispositif selon la revendication 2, **caractérisé en ce que** le montage rotatif (12) des bagues coulissantes (10) est réalisé sous la forme respectivement d'un palier à roulement permettant d'absorber des forces radiales et axiales.

4. Dispositif selon au moins l'une des revendications précédentes, **caractérisé en ce que** le tambour de confection de pneumatiques (1) présente un arbre de tambour (2), une moitié de tambour extérieure (3), une moitié de tambour intérieure (5) et une partie centrale (4), au moins les moitiés de tambour (3, 5) pouvant être déplacées axialement sur l'arbre de tambour (2).

5. Dispositif selon au moins l'une des revendications précédentes, **caractérisé en ce que** le mécanisme d'entraînement des doigts de retournement (8), disposé à l'extérieur du tambour de confection de pneumatiques (1), est réalisé sous la forme d'un servomoteur.

6. Dispositif selon au moins l'une des revendications précédentes, **caractérisé en ce que** les bagues coulissantes (10) présentent respectivement une rainure annulaire (10a) qui sert à l'accouplement des doigts de retournement (8) au mécanisme d'entraînement disposé à l'extérieur du tambour de confection de pneumatiques (1).

7. Dispositif de fabrication de pneumatiques selon la revendication 1, **caractérisé en ce qu'**une machine à carcasse (22) est réalisée de telle sorte que l'utilisation de différents tambours de confection de pneumatiques (1) permet de fabriquer aussi bien des pneumatiques crus de confection plate que des pneumatiques crus de confection en couronne.

8. Dispositif de fabrication de pneumatiques selon la revendication 7, **caractérisé en ce que** la fabrication flexible de pneumatiques crus de confection plate ou en couronne est rendue possible par une deuxième unité d'entraînement dans la machine à carcasse (22).

9. Dispositif de fabrication de pneumatiques selon au moins l'une des revendications précédentes, **caractérisé en ce que** l'unité d'entraînement dans l'anneau de confection de pneumatiques fixe (16) peut être accouplée à des bagues coulissantes (10) du tambour de confection de pneumatiques (1) par l'intermédiaire de tenons d'entraînement (11) radialement mobiles.

10. Dispositif de fabrication de pneumatiques selon au moins l'une des revendications précédentes, **caractérisé en ce que** les doigts de retournement (8) peuvent être guidés au niveau de leur mouvement par un guidage forcé (9).

11. Dispositif de fabrication de pneumatiques selon au moins l'une des revendications précédentes, **caractérisé en ce que** les doigts de retournement (8) peuvent être pilotés de telle sorte qu'ils réalisent au moins temporairement au moins une épaule extérieure par laquelle les noyaux (19) peuvent être fixés côté extérieur en plus du dispositif de serrage de noyau (6) même pendant une rotation du tambour de confection de pneumatiques (1).

12. Dispositif de fabrication de pneumatiques selon au moins l'une des revendications précédentes, **caractérisé en ce qu'**une force de pression de matériau pouvant être utilisée de manière plus efficace est atteinte **en ce que** la distance de pose de noyau pendant le processus de retournement peut être prédéfinie de telle sorte qu'une distance de pose de noyau supérieure ou égale à la plus petite mesure de noyau à noyau qui est approchée dans la suite du processus de confection de pneumatiques est atteinte.

13. Procédé de fabrication de pneumatiques, le procédé comprenant l'étape consistant à :
prévoir un dispositif selon l'une quelconque des revendications précédentes ;
**caractérisé en ce que** le processus de retournement du matériau de pneumatique est entraîné par un mécanisme d'entraînement des doigts de retournement (8), monté à l'extérieur du tambour de confection de pneumatiques (1), et **en ce qu'**un retournement des plis du matériau du pneumatique cru est effectué pendant la rotation du tambour de confection de pneumatiques (1).

14. Procédé selon la revendication 13, **caractérisé en ce qu'**un pilotage synchrone de la mécanique de retournement sur les deux moitiés de tambour (3, 5) du tambour de confection de pneumatiques (1) permet d'effectuer un retournement particulièrement homogène des plis du pneumatique cru.

15. Procédé selon les revendications 13 ou 14, **caractérisé en ce qu'**une pose de noyau avec une distance de noyau à noyau supérieure ou égale à la plus petite distance de noyau approchée dans la suite de la fabrication de pneumatique cru permet de créer un rapport force/angle avantageux qui permet une utilisation plus efficace de la force de pression de matériau.
